# FASCICULE DE BREVET EUROPEEN

(11) **EP 1 468 043 B1**
(45) Date de publication et mention de la délivrance du brevet: **02.06.2010**
(21) Numéro de dépôt: 03715049.7
(22) Date de dépôt: 24.01.2003
(51) Int. Cl.: C08K 3/00

(54) **AGENT IGNIFUGEANT A BASE D'ACIDE ORTHOPHOSPHORIQUE IMPREGNE SUR UN OXYDE MINERAL DE GRANDE POROSITE, SON PROCEDE DE PREPARATION ET SON UTILISATION**
FLAMMSCHUTZ AUF DER BASIS VON MIT ORTHOPHOSPHORSÄURE IMPRÄGNIERTEN OXYDISCHEN MATERIALIEN MIT HOHER POROSITÄT, VERFAHREN ZU DEREN HERSTELLUNG UND IHRE VERWENDUNG
NOVEL FIRE-RETARDANT AGENT BASED ON POLYPHOSPHORIC OR ORTHOPHOSPHORIC ACID IMPREGNATED ON A HIGHLY POROUS MINERAL OXIDE METHOD FOR PREPARATION AND USE THEREOF

(30) Priorité: 25.01.2002 FR 0200929
(43) Date de publication de la demande: 20.10.2004
(73) Titulaire: Rhodia Consumer Specialties Limited, Watford, Hertfordshire WD24 4QP (GB)
(72) Inventeur: LEITE, Lorraine, F-75020 PARIS (FR)
(74) Mandataire: Seugnet, Jean Louis
(86) Numéro de dépôt international: PCT/FR2003/000238
(87) Numéro de publication internationale: WO 2003/062312

(56) Documents cités:
- EP-A- 0 507 174
- DATABASE WPI Section Ch, Week 197813 Derwent Publications Ltd., London, GB; Class A60, AN 1978-24273A XP002210780 & JP 53 016744 A (KANEG FUCHI CHEM KK), 16 février 1978 (1978-02-16)

## Description

La présente invention concerne un nouvel agent ignifugeant à base d'acide orthophosphorique ou polyphosphorique imprégné sur un oxyde minéral de grande porosité, son procédé de préparation et son utilisation.

Le phosphore est disponible à l'état élémentaire, sous forme de composés phosphatés organiques ou les phosphates acides inorganiques. Toutes les formes de phosphates sont connues pour leurs utilisations en tant qu'agents ignifugeant dans des systèmes de polymères, comme par exemple le phosphore rouge pour les polyamides, les phosphates organiques dans les oxydes de polyphenylène ou les polyuréthannes et les phosphates acides inorganiques dans la cellulose, comme cela est décrit dans la publication intitulée « Flame Retardants », dans Ullmann's Encyclopedia of Industrial Chemistry, année 1988, vol. A 11, page 125, colonne 2.

Ainsi, l'utilisation de polyphosphates d'ammonium comme additifs pour améliorer la résistance au feu des matériaux dans lesquels ils sont incorporés a été décrite dans le document intitulé « ammonium polyphosphate and its application as a flame retardant » de J.Wortmann, in « Fire retard. Proc. Eur. Conf. Flammability Fire Retard. », pages 193-196, 1st (1979).

Cependant, l'utilisation de ces composés présente des inconvénients. En particulier ces composés coûtent chers.

Le besoin existait de développer de nouveaux agents ignifugeants qui ne présentent pas ces inconvénients.

C'est le but de la présente invention.

La Demanderesse vient de découvrir que, de manière tout à fait inattendue, l'imprégnation à sec d'un oxyde minéral de grande porosité par une quantité suffisante d'acide orthophosphorique ou polyphosphorique concentré pour imprégner l'oxyde minéral, suivie d'un séchage à la pression atmosphérique à une température comprise entre 100 et 200°C pendant au moins 3 heures suivi d'une calcination à pression atmosphérique à une température comprise entre 200°C et 500°C pendant au moins 2 heures permet d'obtenir un nouvel agent ignifugeant qui présente l'avantage d'obtenir de bonnes performances de résistance au feu des matériaux dans lesquels il est incorporé tout en limitant le coût de fabrication.

L'oxyde minéral peut être choisi parmi la silice, l'alumine, la silice-alumine, la zircone ou l'oxyde de titane. De préférence on utilise la silice. Celle-ci peut être une silice de précipitation ou une silice de combustion.

L'oxyde minéral doit être de grande porosité. Ceci signifie que son volume poreux doit être d'au moins 1 ml/g et de préférence d'au moins 3 ml/g.

Lorsque l'oxyde de minéral est de la silice, il peut s'agir par exemple d'une silice Tixosil 38A, Tixosil 38D, Tixosil 38X, ou Tixosil 365 de la société RHODIA.

L'acide orthophosphorique encore appelé acide monophosphorique correspond à H₃PO₄. Les acides polyphosphoriques selon l'invention peuvent être choisis parmi ceux décrits dans le livre intitulé « Phosphorus an outline of its Chemistry, Biochemistry and Uses », fifth Edition, D.E.C. Corbridge, Elsevier, 1995 page 170 et 180 à 182.

On peut citer notamment l'acide pyrophosphorique ou acide diphosphorique de formule H₄P₂O₇, l'acide triphosphorique de formule H₅P₃O₁₀, les polyphosphoriques acides de formule Hₙ₊₂PₙO₃ₙ₊₁, et les acides métaphosphoriques de formule HₙPₙO₃ₙ.

Comme indiqué à la page 181 du document « Phosphorus an outline of its Chemistry, Biochemistry and Uses » mentionné ci-dessus, l'acide phosphorique ou les acides polyphosphoriques commerciaux sont caractérisés par leur équivalent en P₂O₅ ou H₃PO₄ exprimés en pourcentage par rapport au poids.

Ainsi il existe une classe d'acides dits superphosphoriques dont l'équivalent en H₃PO₄ est supérieur à 100. Ces acides superphosphoriques sont les acides polyphosphoriques préférés.

La quantité suffisante d'acide orthophosphorique ou polyphosphorique concentré à utiliser pour l'imprégnation correspond de préférence à la quantité maximale qu'il est possible d'imprégner sur l'oxyde minéral, c'est à dire le volume pour lequel l'oxyde minéral n'est plus capable d'absorber l'acide orthophosphorique ou polyphosphorique liquide.

L'imprégnation se fait à sec, c'est à dire que l'on ajoute l'acide orthophosphorique ou polyphosphorique concentré avec une burette par doses de 25 ml au goutte à goutte.

Le séchage est effectué par exemple dans une étuve à la pression atmosphérique à une température comprise entre 100 et 200°C pendant au moins 3 heures.

Ensuite on procède à la calcination de l'oxyde minéral imprégné à pression atmosphérique à une température comprise entre 200°C et 500°C pendant au moins 2 heures.

La présente invention a aussi pour objet le produit susceptible d'être obtenu par le procédé d'imprégnation de l'oxyde minéral par l'acide orthophosphorique ou polyphosphorique, de séchage et de calcination décrits ci-dessus.

Ce produit est obtenu sous la forme d'une poudre, qu'il est possible de mettre en forme suivant les procédés de mise en forme couramment utilisés dans l'industrie ;

La présente invention a aussi pour objet l'utilisation du produit obtenu par le procédé pour l'ignifugation des matériaux, et en particulier des polymères.

Lorsque le produit obtenu par le procédé est ajouté dans des polymères thermoplastiques tels que les polyamides et polyoléfines, il est incorporé par mélange dans une extrudeuse pour obtenir des granulés. Le mélange comprend les constituants suivants :
- le polymère sous forme de granulé ou de poudre,
- le produit obtenu par le procédé selon l'invention ;
- un polyalcool, comme par exemple le pentaerythritol ou le dipentaerythritol qui se déshydrate sous l'effet de l'acide polyphosphorique et conduit à la formation de carbone ;
- un agent gonflant, comme par exemple le dicyandiamide, la mélamine, le cyanurate de mélamine ou le phosphate de mélamine qui se décompose pendant que la suspension de carbone dans le polymère fondu mousse.

Le rapport oxyde minéral imprégné d'acide orthophosphorique ou polyphosphorique/polyalcool/agent gonflant utilisé dans cette application est compris entre 2/1/1 à 7/1/1. De préférence on utilise un rapport d'environ 3/1/1. La quantité totale de ces additifs ignifugeants utilisée varie entre 5 à 50% par rapport au poids total du polymère obtenu. De préférence la quantité totale de ces additifs ignifugeants est comprise entre 20 à 40% par rapport au poids total du polymère obtenu.

Lorsque l'oxyde de minéral imprégné d'acide orthophosphorique ou polyphosphorique est incorporé dans des polymères thermodurcissables tels que le polyuréthanne, les résines époxydes (comme l'araldite), les résines polyester, les résines phénoliques (comme la bakélite), ou les aminoplastes (comme le formica), l'oxyde minéral imprégné d'acide orthophosphorique ou polyphosphorique et les autres additifs tels que l'agent gonflant sont incorporés à l'un des monomères ou oligomères avant la réaction de polymérisation ou de réticulation. Les quantités d'oxyde minéral imprégné d'acide orthophosphorique ou polyphosphorique utilisées sont comprises dans les mêmes proportions que celles décrites pour les polymères thermoplastiques.

D'autres aspects et avantages des produits objets de l'invention apparaîtront à la lumière des exemples.

### A- Exemples de préparation d'une silice de grande porosité imprégnée par de l'acide phosphorique concentré et calcinée selon l'invention

### Exemple 1 : Exemples de préparation d'une silice de grande porosité imprégnée par de l'acide phosphorique concentré et calcinée selon l'invention

La silice de grande porosité utilisée est une silice appelée Tixosi138A de la société RHODIA ayant un volume poreux de 3,2 ml/g.

L'acide orthophosphorique utilisé est H₃PO₄ à 85% normapur de marque Prolabo réf. 20624295 (MH₃PO₄ = 98 g/mol, d = 1,7 g/ml).

La quantité suffisante d'acide orthophosphorique concentré à utiliser pour l'imprégnation correspond de préférence à la quantité maximale qu'il est possible d'imprégner sur la silice c'est à dire le volume pour lequel on obtient la saturation de la silice.

Pour une masse de silice de 50 g on devra utiliser en théorie 3,2 x 50 = 160 ml de H₃PO₄ à 85% soit, 1,7x160 = 272 g de H₃PO₄ à 85% (ou 231,2 g de H₃PO₄ pur).

L'imprégnation se fait à sec, c'est à dire que l'on ajoute l'acide concentré avec une burette par doses de 25 ml au goutte à goutte.

Le volume maximum atteint imprégné est de 134 ml.

La différence entre les 160 ml théoriquement utilisables et les 134 ml utilisés en pratique provient de la viscosité de l'acide qui est plus importante que celle de l'eau.

Ensuite on procède au séchage de la silice imprégnée dans une étuve à pression atmosphérique à 150°C pendant une nuit.

Ensuite on procède à la calcination de la silice imprégnée obtenue à une température d'au moins 300°C pendant 2 heures.

### B- Exemples de tests

La silice imprégnée d'acide orthophosphorique de l'exemple 1 a été testée selon des tests classiques d'ignifugation décrits ci-dessous.

Ces résultats ont été comparés à ceux obtenus pour une éprouvette de polypropylène. Les résultats sont présentés dans le tableau I ci-dessous :

### 1) préparation des éprouvettes en polypropylène

Le polypropylène seul est malaxé pendant 3 minutes à 200 tr/min à 155°C. On introduit ensuite la poudre contenant 18% en poids de silice imprégnée de H₃PO₄ préparée à l'exemple 1 par rapport au poids total du mélange, 6% en poids de pentaerythritol par rapport au poids total du mélange et 6% en poids de mélamine par rapport au poids total du mélange dans le malaxeur et on poursuit le malaxage pendant 3 minutes.

On procède ensuite à une thermocompression à 190°C à 1 bar pendant 4 minutes, puis à 100 bars pendant 1 minute et à 200 bars pendant 1 minute, on refroidit ensuite pendant 4 minutes en maintenant cette pression de 200 bars. On obtient ainsi par thermocompression des barreaux normés pour les tests de comportement au feu de type LOI et UL94.

La même opération est réalisée sans ajouter de silice imprégnée, ceci afin de pouvoir obtenir des exemples comparatifs.

### 2) Détermination du comportement au feu des éprouvettes

Deux tests ont été utilisé afin de déterminer le comportement au feu des éprouvettes :
- le test au moyen de l'indice d'oxygène ci-dessous appelé « LOI » décrit dans la norme internationale ISO-4589-2 :1996(F) ;
- et le test au contact d'une petite flamme comme source d'allumage ci-dessous appelé « UL94 » décrit dans la norme NF ISO -1210 :1992(F).

**Tableau I**

| **tests** | polypropylène **seul** | **Polypropylène incorporé de l'exemple 1** |
|---|---|---|
| **UL94** | Non classé | Classification VO |
| **LOI** | 17% | 31% |

La classification VO est la meilleure dans le test UL94.

Les résultats du test LOI ou « limiting oxygen index » sont exprimés en % et indique le taux minimal d'oxygène nécessaire au maintien de la combustion. Plus ce taux est élevé, plus le matériau résiste à l'inflammation.

Ainsi on constate que les résultats obtenus avec l'éprouvette de polypropylène incorporée avec le composé de l'exemple 1 sont supérieurs aux résultats obtenus pour l'éprouvette de polypropylène non traitée.

## Revendications

1. Procédé d'imprégnation à sec d'un oxyde minéral de grande porosité par une quantité suffisante d'acide orthophosphorique ou polyphosphorique concentré suivie d'un séchage à la pression atmosphérique à une température comprise entre 100 et 200°C pendant au moins 3 heures suivi d'une calcination à pression atmosphérique à une température comprise entre 200°C et 500°C pendant au moins 2 heures.

2. Procédé selon la revendication 1, **caractérisée en ce que** l'oxyde minéral de grande porosité est un oxyde minéral ayant un volume poreux d'au moins 1 ml/g.

3. Procédé selon la revendication 2, **caractérisée en ce que** l'oxyde minéral de grande porosité est un oxyde minéral ayant un volume poreux d'au moins 3 ml/g.

4. Procédé selon l'une quelconque des revendications 1 à 3, **caractérisée en ce que** l'oxyde minéral est choisi parmi la silice, l'alumine, la silice alumine, la zircone ou l'oxyde de titane.

5. Procédé selon la revendication 4, **caractérisée en ce que** l'oxyde minéral est la silice.

6. Procédé selon l'une quelconque des revendications 1 à 5, **caractérisée en ce que** la quantité suffisante d'acide orthophosphorique ou polyphosphorique concentré à utiliser pour l'imprégnation correspond de préférence à la quantité maximale qu'il est possible d'imprégner sur l'oxyde minéral, c'est à dire le volume pour lequel l'oxyde minéral n'est plus capable d'absorber l'acide orthophosphorique ou polyphosphorique liquide.

7. Procédé selon l'une quelconque des revendications 1 à 6, **caractérisée en ce que** l'acide polyphosphorique utilisé est choisi parmi l'acide pyrophosphorique ou acide diphosphorique de formule H₄P₂O₇, l'acide triphosphorique de formule H₅P₃O₁₀, les polyphosphoriques acides de formule Hₙ₊₂PₙO₃ₙ₊₁, les acides métaphosphoriques de formule HₙPₙO₃ₙ ou leur mélange.

8. Procédé selon l'une quelconque des revendications 1 à 7, **caractérisé en ce que** l'acide polyphosphorique utilisé a un équivalent H₃PO₄ supérieur à 100.

9. Produit susceptible d'être obtenu par le procédé selon l'une quelconque des revendications 1 à 8.

10. Utilisation du produit selon la revendication 9 pour l'ignifugation des polymères.

11. Utilisation selon la revendication 10, **caractérisée en ce que** les polymères sont choisis parmi les polymères thermodurcissables.

12. Utilisation selon la revendication 10, **caractérisée en ce que** les polymères sont choisis parmi les polymères thermoplastiques.

13. Utilisation selon la revendication 12, **caractérisée en ce que** le polymère thermoplastique est une polyoléfine.

14. Utilisation selon la revendication 13, **caractérisée en ce que** la polyoléfine est du polypropylène.

## Claims

1. Process for the dry impregnation of a highly porous mineral oxide with a sufficient amount of concentrated orthophosphoric or polyphosphoric acid, followed by drying at atmospheric pressure at a temperature of between 100 and 200°C for at least 3 hours, followed by calcination at atmospheric pressure at a temperature of between 200°C and 500°C for at least 2 hours.

2. Process according to Claim 1, **characterized in that** the highly porous mineral oxide is a mineral oxide with a pore volume of at least 1 ml/g.

3. Process according to Claim 2, **characterized in that** the highly porous mineral oxide is a mineral oxide with a pore volume of at least 3 ml/g.

4. Process according to any one of Claims 1 to 3, **characterized in that** the mineral oxide is chosen from silica, alumina, silica-alumina, zirconia and titanium oxide.

5. Process according to Claim 4, **characterized in that** the mineral oxide is silica.

6. Process according to any one of Claims 1 to 5, **characterized in that** the sufficient amount of concentrated orthophosphoric or polyphosphoric acid to be used for the impregnation preferably corresponds to the maximum amount that it is possible to impregnate on the mineral oxide, i.e. the volume for which the mineral oxide is no longer capable of absorbing the liquid orthophosphoric or polyphosphoric acid.

7. Process according to any one of Claims 1 to 6, **characterized in that** the polyphosphoric acid used is chosen from pyrophosphoric acid or diphosphoric acid of formula H₄P₂O₇, triphosphoric acid of formula H₅P₃O₁₀, the polyphosphoric acids of formula Hₙ₊₂PnO₃ₙ₊₁. and the metaphosphoric acids of formula HₙPₙO₃ₙ, or a mixture thereof.

8. Process according to any one of Claims 1 to 7, **characterized in that** the polyphosphoric acid used has an H₃PO₄ equivalent of greater than 100.

9. Product that may be obtained by Process according to any one of Claims 1 to 8.

10. Use of the product according to Claim 9 for rendering polymers fire retardant.

11. Use according to Claim 10, **characterized in that** the polymers are chosen from thermosetting polymers.

12. Use according to Claim 10, **characterized in that** the polymers are chosen from thermoplastic polymers.

13. Use according to Claim 12, **characterized in that** the thermoplastic polymer is a polyolefin.

14. Use according to Claim 13, **characterized in that** the polyolefin is polypropylene.

## Patentansprüche

1. Verfahren zur Trockenimprägnierung eines hochporösen anorganischen Oxids mit einer ausreichenden Menge konzentrierter Orthophosphorsäure oder Polyphosphorsäure mit nachfolgender Trocknung bei Normaldruck bei einer Temperatur zwischen 100 und 200°C über einen Zeitraum von mindestens 3 Stunden und nachfolgender Calcinierung bei Normaldruck bei einer Temperatur zwischen 200°C und 500°C über einen Zeitraum von mindestens 2 Stunden.

2. Verfahren nach Anspruch 1, **dadurch gekennzeichnet, daß** es sich bei dem hochporösen anorganischen Oxid um ein anorganisches Oxid mit einem Porenvolumen von mindestens 1 ml/g handelt.

3. Verfahren nach Anspruch 2, **dadurch gekennzeichnet, daß** es sich bei dem hochporösen anorganischen Oxid um ein anorganisches Oxid mit einem Porenvolumen von mindestens 3 ml/g handelt.

4. Verfahren nach einem der Ansprüche 1 bis 3, **dadurch gekennzeichnet, daß** man das anorganische Oxid unter Siliciumdioxid, Aluminiumoxid, Siliciumoxid-Aluminiumoxid, Zirkoniumdioxid oder Titandioxid auswählt.

5. Verfahren nach Anspruch 4, **dadurch gekennzeichnet, daß** es sich bei dem anorganischen Oxid um Siliciumdioxid handelt.

6. Verfahren nach einem der Ansprüche 1 bis 5, **dadurch gekennzeichnet, daß** die für die Imprägnierung zu verwendende ausreichenden Menge konzentrierter Orthophosphorsäure oder Polyphosphorsäure vorzugsweise der Maximalmenge, mit der das anorganische Oxid imprägniert werden kann, d.h. dem Volumen, für das das anorganische Oxid die flüssige Orthophosphorsäure oder Polyphosphorsäure nicht mehr absorbieren kann, entspricht.

7. Verfahren nach einem der Ansprüche 1 bis 6, **dadurch gekennzeichnet, daß** man die verwendete Polyphosphorsäure unter Pyrophosphorsäure bzw. Diphosphorsäure der Formel H₄P₂O₇, Triphosphorsäure der Formel H₅P₃O₁₀, Polyphosphorsäuren der Formel Hₙ₊₂PₙO₃ₙ₊₁, Metaphosphorsäuren der Formel HₙPₙO₃ₙ oder einer Mischung davon auswählt.

8. Verfahren nach einem der Ansprüche 1 bis 7, **dadurch gekennzeichnet, daß** die verwendete Polyphosphorsäure ein H₃PO₄-Äquivalent von mehr als 100 aufweist.

9. Produkt, das nach dem Verfahren nach einem der Ansprüche 1 bis 8 erhältlich ist.

10. Verwendung des Produkts nach Anspruch 9 zur Flammschutzausrüstung von Polymeren.

11. Verwendung nach Anspruch 10, **dadurch gekennzeichnet, daß** die Polymere unter duroplastischen Polymeren ausgewählt sind.

12. Verwendung nach Anspruch 10, **dadurch gekennzeichnet, daß** die Polymere unter thermoplastischen Polymeren ausgewählt sind.

13. Verwendung nach Anspruch 12, **dadurch gekennzeichnet, daß** es sich bei dem thermoplastischen Polymer um ein Polyolefin handelt.

14. Verwendung nach Anspruch 13, **dadurch gekennzeichnet, daß** es sich bei dem Polyolefin um Polypropylen handelt.
